# FASCICULE DE BREVET EUROPEEN

(11) **EP 0 606 801 B1**
(45) Date de publication et mention de la délivrance du brevet: **25.09.1996**
(21) Numéro de dépôt: 93403151.9
(22) Date de dépôt: 23.12.1993
(51) Int. Cl.: B60R 13/04, F16B 5/12

(54) **Profilé en une matière polymère, apte à se fixer par clipsage sur des plots d'une carrosserie d'automobile**
Profil aus polymerem Material, geeignet zum Einschnappen an Karosseriestiften
Profile made of polymeric material suitable to click on vehicle body pins

(30) Priorité: 13.01.1993 FR 9300219
(43) Date de publication de la demande: 20.07.1994
(73) Titulaire: Société Anonyme dite: MESNEL, 92000 Nanterre (FR)
(72) Inventeur: Cholot, Robert, F-27480 Fleury-La-Foret (FR)
(74) Mandataire: Jolly, Jean-Pierre

(56) Documents cités:
- DE-U- 7 714 639
- DE-U- 8 520 666
- DE-U- 9 214 388
- US-A- 4 363 839
- US-A- 5 035 560

## Description

La présente invention concerne un nouveau profilé en une matière polymère, apte à se fixer par clipsage sur des plots d'une carrosserie d'automobile.

Il existe de très nombreux types de profilés destinés à être fixés sur une carrosserie d'automobile notamment par clipsage sur des plots rigides faisant saillie à la surface de cette carrosserie. De tels profilés sont notamment utilisés pour des joints de double étanchéité, pour des joints d'étanchéité de bas de caisse d'automobile ou pour des joints anti-salissure. Ils sont généralement réalisés par extrusion ou co-extrusion d'une ou de plusieurs matières thermoplastiques et ils peuvent éventuellement comporter une armature métallique noyée dans l'une des matières extrudées.

Les profilés connus de ce type sont habituellement en un matériau relativement dur, permettant de les clipser sous pression sur la tête de plots rigides à section en T, prévus dans ce but à la surface de la carrosserie d'automobile, sur la tôle de laquelle ils sont soudés.

EP-A-0 487 965 décrit, en référence aux figures 10 à 14, un profilé en une matière polymère, destiné à être fixé sur la tête de plots rigides à section en T faisant saillie à la surface d'une carrosserie d'automobile. Ce profilé comprenant :
- d'une part, un corps en une première matière polymère, ce corps comprenant deux parties latérales destinées à être placées de part et d'autres des plots, ces parties latérales étant réunies par une partie faisant pont destinée à être disposée au-dessus de la tête des plots ; et
- d'autre part, deux lèvres attenantes chacune à une paroi de l'une des parties latérales et faisant saillie par rapport à celle-ci au-dessous de la partie formant pont en une position telle qu'elles peuvent se clipser au-dessous de la tête des plots.

On connaît également, par DE-U-85 20 666, un profilé du même type général que le précédent, également destiné à être clipsé sur un plot à section en T, mais pour la fixation d'un joint sur la porte d'un réfrigérateur. Ce profilé présente des parois latérales souples.

La présente invention vise à proposer de nouveaux profilés de ce type dans lesquels le corps du profilé est en un matériau polymère relativement souple, en élastomère par exemple, tandis que les parties destinées à être engagées par clipsage au-dessous de la tête des plots sont en un matériau polymère plus dur, par exemple à base de polyoléfine, réticulée ou non, et sont co-extrudées avec le corps du profilé.

A cet effet, l'invention a pour objet un profilé en au moins une matière polymère, destiné à être fixé par clipsage sur la tête de plots rigides à section en T faisant saillie à la surface d'une carrosserie d'automobile, ce profilé comportant :
- d'une part, un corps en une première matière polymère, ce corps comprenant deux parties latérales destinées à être placées de part et d'autre des plots, ces parties latérales étant réunies par une partie faisant pont, destinée à être disposée au-dessus des têtes des plots, et
- d'autre part, deux lèvres attenantes chacune à une paroi de l'une des parties latérales et faisant saillie par rapport à celle-ci au dessous de la partie formant pont en une position telle qu'elles peuvent se clipser au-dessous de la tête des plots,
le profilé étant caractérisé en ce que les deux parties latérales sont tubulaires, en ce que chacune desdites parois est souple et en ce que les deux lèvres sont en une seconde matière polymère d'une dureté plus élevée que celle de la première matière, le corps et les deux lèvres provenant d'une unique opération de co-extrusion.

Du fait que les lèvres destinées à être clipsées sont attenantes à une paroi souple d'une partie tubulaire, ces parois peuvent se déformer latéralement, lors de la mise en place du profilé sur les plots, ou s'écarter l'une de l'autre, pour reprendre ensuite leur position initiale par élasticité.

Le profilé pourra comporter ou non un plan de symétrie, les deux parties tubulaires pouvant être identiques ou différentes, suivant la fonction de ce profilé.

Comme indiqué ci-dessus, le corps du profilé pourra être, par exemple, en caoutchouc, notamment en EPDM, d'une dureté SHORE A comprise entre 50 et 80, la dureté pouvant être différente en différents emplacements d'une même section transversale, en fonction de l'effet recherché. La paroi sur laquelle sont fixées les lèvres sera élastique et nerveuse et pourra avoir des caractéristiques d'élasticité et de dureté différentes de celles du corps.

Les lèvres venant se clipser sous la tête des plots pourront être en un matériau plus dur, par exemple, d'une dureté SHORE D comprise entre 40 et 70.

Une armature métallique pourra être noyée dans le corps du profilé pour renforcer sa rigidité, mais, si le matériau dont est constitué ce corps est suffisamment rigide, on pourra s'abstenir d'utiliser une telle armature.

Avantageusement, au moins une lèvre souple fera saillie à partir de la surface de la partie formant pont destinée à être tournée vers la tête des plots, afin d'être pincée entre cette surface et la tête des plots, après mise en place du profilé sur ceux-ci, et d'éviter ainsi le contact direct entre ces têtes et la partie faisant pont.

Comme indiqué ci-dessus, un tel profilé peut comporter sur sa partie externe différents organes d'étanchéité ou d'ornementation, suivant le rôle qui lui est dévolu.

Une forme de réalisation d'un tel profilé va être décrite ci-après plus en détail, à titre d'exemple non limitatif, en référence aux dessins annexés. Sur ces dessins :
La figure 1 est une coupe transversale du profilé ;
La figure 2 est une vue en coupe illustrant la mise en place de ce profilé sur des plots soudés sur la surface externe d'une carrosserie d'automobile.

Comme on le voit sur les dessins, dans cette forme de réalisation, le profilé comprend un corps 1, en caoutchouc, qui présente un plan de symétrie. Ce corps 1 comporte deux parties tubulaires 2 réunies par une partie 3 formant pont. Une armature métallique 4, à section en C, par exemple en aluminium ou en acier, est noyée dans le caoutchouc du corps 1, dans chacune des parois des parties tubulaires 2 qui ne sont pas contiguës et dans la partie formant pont 3.

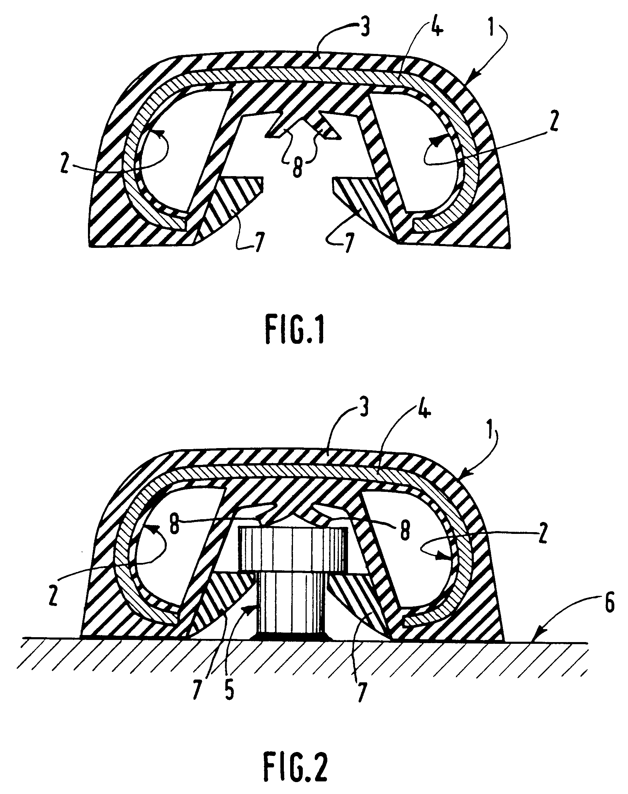

Comme représenté sur la figure 2, ce profilé est destiné à être fixé par clipsage sur la tête de plots 5 à section en T, faisant saillie à la surface d'une carrosserie 6 d'automobile, sur laquelle ils sont soudés, le corps 1 prenant appui contre la carrosserie par des surfaces planes des deux parties tubulaires 2.

Dans ce but, deux lèvres 7 en un matériau thermoplastique plus dur que le caoutchouc dont est constitué le corps 1 font saillie à partir d'une paroi souple des parties tubulaires 2 tournée vers les plots 5, en direction de ces plots, en une position telle qu'elles puissent venir se clipser sous la tête des plots, avec une face plane appliquée contre la face plane inférieure de la tête des plots.

Comme il a été expliqué, lors de la mise en place du profilé sur les plots 5, les parties tubulaires 2 peuvent s'écarter l'une de l'autre et les cloisons portant les lèvres 7 peuvent se déformer, pour revenir ensuite par élasticité à leur position initiale, ce qui facilite grandement l'opération de mise en place du profilé.

Afin d'éviter un contact direct et des heurts entre la partie 3 formant pont et la tête des plots 5, des lèvres 8 font saillie, à partir de la surface de la partie 3 tournée vers la tête des plots, en direction de ceux-ci et, après mise en place du profilé, ces lèvres 8 sont pincées entre la partie 3 et la tête des plots 5.

Il est clair que le profilé conforme à l'invention peut être réalisé facilement, par co-extrusion du corps 1 et des lèvres 7.

Ce profilé peut être utilisé dans toutes les applications auxquelles sont destinés les profilés fixés sur les carrosseries, notamment des profilés de double étanchéité, de bas de caisse, de toiture et anti-salissure.

## Revendications

1. Profilé en au moins une matière polymère, destiné à être fixé par clipsage sur la tête de plots rigides (5) à section en T faisant saillie à la surface d'une carrosserie (6) d'automobile, ce profilé comportant :
- d'une part, un corps (1) en une première matière polymère, ce corps (1) comprenant deux parties latérales (2) destinées à être placées de part et d'autre des plots (5), ces parties latérales (2) étant réunies par une partie faisant pont (3), destinée à être disposée au-dessus des têtes des plots (5), et
- d'autre part, deux lèvres (7) attenantes chacune à une paroi de l'une des parties latérales (2) et faisant saillie par rapport à celle-ci au dessous de la partie (3) formant pont en une position telle qu'elles peuvent se clipser au-dessous de la tête des plots (5),
le profilé étant caractérisé en ce que les deux parties latérales (2) sont tubulaires, en ce que chacune desdites parois est souple et en ce que les deux lèvres (7) sont en une seconde matière polymère, d'une dureté plus élevée que celle de la première matière, le corps (1) et les deux lèvres (7) provenant d'une unique opération de co-extrusion.

2. Profilé selon la revendication 1, caractérisé en ce que le corps (1) est en caoutchouc, notamment en EPDM, d'une dureté SHORE A comprise entre 50 et 80.

3. Profilé selon l'une des revendications 1 et 2, caractérisé en ce que les lèvres (7) ont une dureté SHORE D comprise entre 40 et 70.

4. Profilé selon l'une des revendications 1 à 3, caractérisé en ce qu'une armature métallique (4) est noyée dans la masse du corps (1).

5. Profilé selon la revendication 4, caractérisé en ce que l'armature métallique (4) a une section transversale en C et est noyée dans la masse de chacune des parois des parties latérales (2) qui ne sont pas contiguës et dans la partie (3) formant pont qui réunit ces parties.

6. Profilé selon l'une des revendications 1 à 5, caractérisé en ce que au moins une lèvre souple (8) fait saillie à partir de la surface de la partie (3) formant pont destinée à être tournée vers la tête des plots (5), en vue d'être pincée entre cette surface et la tête des plots (5) après mise en place du profilé sur ces plots.

## Claims

1. A profile matter of at least one polymer material which is intended to be fixed by clipping on to the heads of rigid studs (5) of T-section projecting from the surface of a motor vehicle body (6), the profile member comprising:
- on the one hand a body (1) of a first polymer material, said body (1) comprising two lateral portions (2) intended to be disposed on respective sides of the studs (5), said lateral portions (2) being connected by a portion (3) forming a bridge, which is intended to be disposed over the heads of the studs (5), and
- on the other hand two lips (7) which are each adjacent to a wall of one of the lateral portions (2) and which project with respect thereto below the bridge-forming portion (3) into a position such that they can be clipped below the heads of the studs (5),
the profile member being characterised in that the two lateral portions (2) are tubular, that each of said walls is flexible and that the two lips (7) are of a second polymer material of greater hardness than that of the first material, the body (1) and the two lips (7) resulting from a single co-extrusion operation.

2. A profile member according to claim 1 characterised in that the body (1) is of rubber, in particular EPDM, of a SHORE A hardness of between 50 and 80.

3. A profile member according to one of claims 1 and 2 characterised in that the lips (7) are of a SHORE D hardness of between 40 and 70.

4. A profile member according to one of claims 1 to 3 characterised in that a metal reinforcement (4) is embedded in the mass of the body (1).

5. A profile member according to claim 4 characterised in that the metal reinforcement (4) is of a C-shaped cross-section and is embedded in the mass of each of the walls of the lateral portions (2) which are not contiguous and in the bridge-forming portion (3) which connects said portions.

6. A profile member according to one of claims 1 to 5 characterised in that at least one flexible lip (8) projects from the surface of the bridge-forming portoin (3) which is intended to face towards the heads of the studs (5), in order to be gripped between said surface and the heads of the studs (5) after the profile member has been set in position on said studs.

## Patentansprüche

1. Profilelement aus mindestens einem Polymermaterial, das dazu bestimmt ist, durch Aufklipsen auf dem Kopf von T-förmigen festen Stiften (5) befestigt zu werden, die gegenüber einer Fahrzeugkarosserie (6) vorspringen, wobei das Profilelement aufweist:
- einerseits einen Körper (1) aus einem ersten Polymermaterial, wobei der Körper (1) zwei Seitenbereiche (2) aufweist, die dazu bestimmt sind, auf einer Seite und auf der anderen Seite der Stifte (5) angeordnet zu werden, wobei die Seitenbereiche (2) durch einen brückenbildenden Bereich (3) verbunden sind, der dazu bestimmt ist, auf den Köpfen der Stifte (5) angeordnet zu werden, und
- andererseits zwei Lippen (7), die je an eine Wand eines der Seitenbereiche (2) angrenzen und gegenüber dieser unter dem brückenbildenden Bereich (3) in einer Position derart vorragen, daß sie sich unter den Kopf der Stifte (5) klipsen können,
wobei das Profilelement dadurch gekennzeichnet ist,
daß die beiden Seitenbereiche (2) rohrförmig sind, daß jede dieser Wände weich ist und daß die beiden Lippen (7) aus einem zweiten Polymermaterial sind, dessen Härte größer als die des ersten Materials ist, wobei der Körper (1) und die beiden Lippen (7) über eine gemeinsame Koextrusion hergestellt sind.

2. Profilelement nach Anspruch 1, dadurch gekennzeichnet, daß der Körper (1) aus Kautschuk, insbesondere aus EPDM, mit einer Härte SHORE A zwischen 50 und 80 ist.

3. Profilelement nach Anspruch 1 und 2, dadurch gekennzeichnet, daß die Lippen eine Härte SHORE D zwischen 40 und 70 haben.

4. Profilelement nach Anspruch 1 bis 3, dadurch gekennzeichnet, daß eine Metallarmierung (4) in der Körpermasse (1) eingebettet ist.

5. Profilelement nach Anspruch 4, dadurch gekennzeichnet, daß die Metallarmierung (4) einen C-förmigen Querschnitt aufweist und in die Masse jeder der Wände der Seitenbereiche, die nicht zusammenhängend sind, und in den brückenbildenden Bereich (3) eingebettet ist, der diese Bereiche verbindet.

6. Profilelement nach einem der Ansprüche 1 bis 5, dadurch gekennzeichnet, daß mindestens eine weiche Lippe (8) von der Oberfläche des brückenbildenden Bereichs (3) vorspringt und dazu bestimmt ist, dem Kopf der Stifte (5) zugewandt zu sein, um zwischen diese Oberfläche und den Kopf der Stifte (5) eingeklemmt zu sein, nachdem das Profilelement auf den Stiften angeordnet ist.
